# EUROPÄISCHE PATENTANMELDUNG

(11) **EP 0 632 175 A2**
(43) Veröffentlichungstag der Anmeldung: **04.01.1995**
(21) Anmeldenummer: 94810356.9
(22) Anmeldetag: 17.06.1994
(51) Int. Cl.: E04H 15/18, E04H 3/16, E04B 7/16

(54) **Tragseillagerung**

(30) Priorität: 01.07.1993 CH 1980/93
(71) Anmelder: Zehnder, Alex, CH-5430 Wettingen (CH)
(72) Erfinder: Zehnder, Alex, CH-5430 Wettingen (CH)
(74) Vertreter: Feldmann, Clarence Paul

(57) **Zusammenfassung**

Zwischen zwei Reihen von Pilonen (1) sind Tragseile (2) gespannt. Auf diesen laufen Träger (3), an denen eine Deckplane (4) hängt. Das Tragseil (2) ist durch die Pilone (1) hindurchgeführt und durchragt mit seinem endseitigen Spannstab 20 eine konkave Lagerschale (50). In der Lagerschale liegt ein Wälzkörper (52), durch den der Spannstab (20) ebenfalls hindurchgeführt ist und rückseitig mit einer Mutter 54 gesichert ist. Der Radius des Wälzkörpers (52) ist kleiner als der Radius der konkaven Lagerfläche der Lagerschale (50).

Trotz der sich ständig ändernden Durchhängung des Tragseiles ist dieses somit knickfrei mit der Pilone (1) verbunden.

## Beschreibung

Die vorliegende Erfindung betrifft eine Tragseillagerung einer beweglichen Bedachung, insbesondere für Sportplätze, die aus mehreren, seitlich der zu überdeckenden Fläche angeordnete Pilonen umfasst, von denen jeweils zwei gegenüberliegende Pilonen durch ein Tragseil verbunden sind, auf dem, eine Deckplane haltende, rollend gelagerte Träger laufen.

Eine derartige bewegliche Bedachung wurde vom Anmelder realisiert. Hierbei wurde das Tragseil über Spannmittel fest mit den Pilonen verbunden. Je nach der Weite zwischen zwei gegenüberliegenden Pilonen und dem Gewicht der beweglichen Deckplane, beträgt die Vorspannungskraft des Tragseiles 60 bis 120 Tonnen. Deckt die Deckplane den Sportplatz ab, so verteilt sich deren Gewicht relativ gleichmässig über die gesamte Länge des Tragseiles. Wird jedoch die Deckplane zurückgezogen, so ergibt sich eine ungleichmässige Lastenverteilung auf dem Tragseil. Der Schwerpunkt der Deckplane, die mittelbar über die rollend gelagerten Träger auf das Tragseil wirkt, wandert in Richtung jener Pilone, auf die die Deckplane hingezogen wird. Hierbei verändert sich die Durchbiegung des Tragseiles während des Oeffnens und Schliessens kontinuierlich. Entsprechend verändert sich der Winkel, den das Tragseil mit der Pilone einschliesst. Dies kann zu Knickbewegungen im Tragseil führen. Versuche, dieses Problem in den Griff zu bekommen, indem man zwischen Pilone und Tragseil ein schwenkbares Gleitlager anordnete, führten nicht zum erwünschten Erfolg. Die enormen Zugkräfte bewirkten im Gleitlager einen zu hohen Haftreibungswiderstand, so dass sich das Lager immer nur ruckweise verstellt hat.

Es ist folglich die Aufgabe der vorliegenden Erfindung, eine Tragseillagerung der eingangs genannten Art zu schaffen, bei der die vorgenannten Probleme vermieden werden können.

Diese Aufgabe löst eine Tragseillagerung gemäss Oberbegriff des Patentanspruches 1 dadurch, dass jedes Tragseil mindestens einseitig durch die entsprechende Pilone hindurchgeführt und mit einem Spannstab mit Aussengewinde versehen ist, wobei auf der Pilonenrückseite ein Lager angeordnet ist, durch den der Spannstab hindurchgeführt ist, wobei das Lager aus einer konkaven Lagerschale besteht, in dem ein Wälzkörper liegt, dessen Rundungsradius kleiner als der Radius der konkaven Lagerschalenfläche ist.

Da üblicherweise die Deckplane nur zu einer Seite des Sportplatzes verschoben werden kann, tritt auf jener Seite die grösste Durchbiegung des Tragseiles auf. Es kann folglich genügen, das Tragseil jeweils nur an einer Seite erfindungsgemäss zu lagern. Je grösser jedoch die Spannweite zwischen zwei gegenüberliegenden Pilonen ist, umso grösser werden die Kräfte und umso grösser ist der Tragseildurchmesser und entsprechend bekommt die korrekte Lagerung eine bedeutendere Rolle. Es kann daher vorteilhaft sein, jedes Tragseil beidseitig durch die entsprechende Pilone zu führen und zu lagern.

Die konkave Lagerschale kann eine zylindrische Wälzfläche aufweisen und der Wälzkörper die Form eines Zylindersegmentes haben. Es ist aber auch möglich, dass die konkave Lagerschale eine sphärische Wälzfläche aufweist und der Wälzkörper die Form einer Kugelkalotte hat. Die Wahl der entsprechenden Lagerausbildung wird man zur Hauptsache von den auftretenden Kräften abhängig machen. Insbesondere wenn mit gewissen seitlichen Kräften auf das Tragseil zu rechnen ist, beispielsweise durch Windbelastungen, wird man eher auf die Variante mit der kugeligen Wälzfläche zurückgreifen. Hingegen wird man die andere Lösung eher wählen, wenn die seitlichen Krafteinflüsse gering sind, jedoch besonders hohe Zugkräfte im Tragseil auftreten.

Zur optimalen Einleitung dieser Zugkräfte in das Lager, kann dieses so gestalten, dass der Wälzkörper der Lagerfläche gegenüber eine Plane Druckfläche aufweist, auf die eine auf dem Spannstab aufgeschraubte Spannmutter zur Spannung des Tragseiles aufliegt.

In der Zeichnung ist ein bevorzugtes Ausführungsbeispiel des Erfindungsgegenstandes dargestellt. Es zeigt:
- Figur 1:: einen Sportplatz mit beweglicher Bedachung, bei der die Plane ausgebreitet ist und den Sportplatz abdeckt, während
- Figur 2:: den Zustand zeigt, bei dem die Deckplane in Richtung zu einer Pilonenreihe verschoben ist und der Sportplatz der Witterung ausgesetzt ist.
- Figur 3:: zeigt die erfindungsgemässe Tragseillagerung im Schnitt im Bereich einer Pilone.

Bewegliche Bedachungen der eingangs genannten Art werden insbesondere für Sportplätze wie Eishockeyfelder oder Tennisplätze verwendet, damit man im Freien spielen kann, ohne vollständig der Witterung ausgesetzt zu sein. Bei Eishockeyspielen wird mittels der Deckplane sichergestellt, dass auch bei einsetzendem Schneefall ein Eishockeyspiel regulär zu Ende gespielt werden kann oder um die Eisfläche gegen Sonneneinstrahlung zu schützen und damit eine verminderte Tauwasserbildung zu erreichen. Bei Tennisplätzen kann mittels einer solchen Bedachung der Regen abgehalten werden, oder für die Spieler Schatten gespendet werden.

Die Verwendung der beweglichen Bedachung ist jedoch keineswegs auf Sportplätze beschränkt. Beispielsweise lassen sich so auch offene Marktplätze schützen.

Die bewegliche Bedachung besteht üblicherweise aus je beidseitig des zu bedachenden Platzes angeordneten Reihen von Pilonen 1 zwischen denen ein Tragseil 2 gespannt ist. Auf dem Tragseil 2 laufen rollend gelagerte Träger 3, an denen die Deckplane 4 befestigt ist. Wegen den hohen Spannkräften wird man vorteilhafterweise die Pilonen 1 mittels Stützstreben 10 verstärken. An den vordersten Trägern 3' greift ein hier nicht dargestelltes Zugseil an, mittels dem die Deckplane 4 von der einen Reihe der Pilonen 1 zur anderen Pilonenreihe hinübergezogen werden kann. Auch die entsprechende Aufwickelvorrichtung für die Zugseile ist hier nicht dargestellt, da dies im Zusammenhang mit der vorliegenden Erfindung nicht von Bedeutung ist.

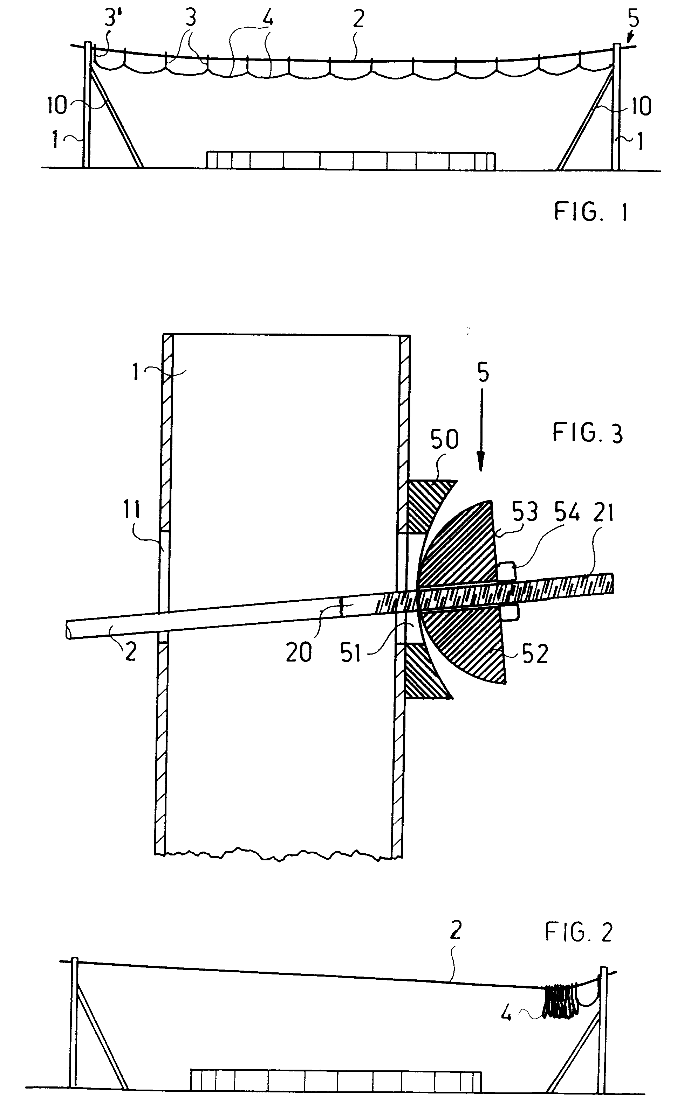

In der Figur 1 erkennt man, dass das Tragseil 2 dank der gleichmässigen Belastung nur geringfügig parabolisch durchhängt. In der Situation nach Figur 2 ist die Deckplane 4 fast vollständig harmonikaartig zur einen Pilonenreihe hin zusammengeschoben. Das Tragseil 2 ist nun in jenem Bereich sehr viel stärker durchgebogen und der eingeschlossene Winkel zwischen Tragseil 2 und Pilone 1 ist erheblich verkleinert.

Diese Situation ist im Bereich jener Pilone 1 in Figur 3 im Detail dargestellt. Die Pilone 1 ist hier als hohles Vierkantrohr gezeichnet. Zwei gegenüberliegende Wandungen weisen entsprechend fluchtend aufeinander ausgerichtete Langlöcher 11 auf. Durch diese ist das Tragseil 2 hindurchgeführt. Am Ende des Tragseiles 2 ist ein Spannstab 20 befestigt, welcher mit einem Aussengewinde 21 versehen ist. Auf der, der Deckplane 4 abgelegenen Seite der Pilone 1 ist die Tragseillagerung 5 angeordnet. Diese besteht aus einer Lagerschale 50, welche das Langloch 11 auf der Pilonenrückseite vollständig überbrückt. Die Lagerschale 50 selber weist ebenfalls eine Langlochdurchführung 51 auf, welche wiederum mit den beiden Langlöchern 11 der Pilone 1 fluchtet. Die Lagerschale hat eine konkave Lagerfläche, in dem ein Wälzkörper 52 liegt. Der Krümmungsradius der konkaven Lagerfläche der Lagerschale 50 ist grösser als der Rundungsradius des in ihm liegenden Wälzkörpers 52. Der Wälzkörper 52 hat eine mittige Bohrung 53, durch den der Spannstab 20 des Tragseiles 2 hindurchgeführt ist. Mittels einer Mutter 54, die auf das Gewinde 21 des Spannstabes 20 aufgeschraubt ist, lässt sich das Tragseil befestigen und spannen. Selbstverständlich wird man eine zweite Kontermutter noch aufschrauben, um die erste Mutter 54 zu sichern. Diese Kontermutter ist jedoch in der Zeichnung nicht dargestellt.

Sowohl die Lagerschale 50 wie auch der Wälzkörper 52 sind im Schnitt dargestellt, so dass die Darstellung genau gleich ist, ob die konkave Lagerschale zylindrisch oder sphärisch gestaltet ist. Genauso lässt sich aus der Zeichnung nicht schliessen, ob der Wälzkörper als Zylindersegment oder als Kugelkalotte gefertigt ist. Beide Varianten sind jedoch, wie eingangs erwähnt, möglich.

## Patentansprüche

1. Tragseillagerung (5) einer beweglichen Bedachung, insbesondere für Sportplätze, die aus mehreren, seitlich der zu überdeckenden Fläche angeordnete Pilonen (1) umfasst, von denen jeweils zwei gegenüberliegende Pilonen (1) durch ein Tragseil (2) verbunden sind, auf dem, eine Deckplane (4) haltende, rollend gelagerte Träger (3) laufen, dadurch gekennzeichnet, dass jedes Tragseil (2) mindestens einseitig durch die entsprechende Pilone (1) hindurchgeführt und mit einem Spannstab (20) mit Aussengewinde (21) versehen ist, wobei auf der Pilonenrückseite ein Lager (5) angeordnet ist, durch den der Spannstab hindurchgeführt ist, wobei das Lager aus einer konkaven Lagerschale (51) besteht in dem ein Wälzkörper (52) liegt, dessen Rundungsradius kleiner als der Radius der konkaven Lagerschalenfläche ist.

2. Tragseillagerung nach Anspruch 1, dadurch gekennzeichnet, dass die konkave Lagerschale (51) eine zylindrische Lagerschalenfläche aufweist und der Wälzkörper (52) die Form eines Zylindersegmentes hat.

3. Tragseillagerung nach Anspruch 1, dadurch gekennzeichnet, dass die konkave Lagerschale (50) eine sphärische Wälzfläche aufweist und der Wälzkörper (52) die Form einer Kugelkalotte hat.

4. Tragseillagerung nach einem der Ansprüche 1 - 3, dadurch gekennzeichnet, dass der Wälzkörper (52) der Lagerfläche gegenüber eine plane Druckfläche aufweist auf die eine auf dem Spannstab (20) aufgeschraubte Spannmutter (54) zur Spannung des Tragseiles (2) aufliegt.

5. Tragseillagerung nach einem der Ansprüche 1 - 4, dadurch gekennzeichnet, dass jedes Tragseil (2) beidseitig durch die entsprechende Pilone (1) hindurchgeführt und gelagert ist.
